# EUROPEAN PATENT SPECIFICATION

(11) **EP 2 756 918 B1**
(45) Date of publication and mention of the grant of the patent: **13.02.2019**
(21) Application number: 11872172.9
(22) Date of filing: 16.09.2011
(51) Int. Cl.: B23Q 3/155, B23Q 7/04

(54) **Handler for exchanging tools**
Handhabungsgerät zum Wechseln von Werkzeugen
Manipulateur pour échanger des outils

(43) Date of publication of application: 23.07.2014
(73) Proprietor: Fundacion Tekniker, 20600 Eibar (Guipuzcoa) (ES); MAHER HOLDING, S.A., 20870 Elgoibar (Gipuzkoa) (ES)
(72) Inventor: MANSO MÁRQUEZ, Jose María, E-20130 Urnieta (Guipuzcoa) (ES); ECEIZA AGOTE, Patxi, E-20800 Zarautz (Guipuzcoa) (ES)
(74) Representative: Carlos Hernando, Borja
(86) International application number: PCT/ES2011/070647
(87) International publication number: WO 2013/038032

(56) References cited:
- EP-A2- 1 016 497
- WO-A1-2011/101496
- WO-A1-2011/101496
- DE-A1- 19 510 498
- ES-A1- 8 704 372
- ES-T3- 2 308 352
- ES-T3- 2 308 629
- GB-A- 2 075 893
- US-A- 4 587 716
- US-A- 4 611 377
- US-A- 5 107 582

## Description

### Objet of the invention

The present invention, a piece of equipment for replacing components in horizontal lathes, refers to a piece of equipment equipped with one single static storage unit and an automated piece of handling equipment or robot, which has manipulation means with various built-in retention devices that serve to fasten the various components, such as tools, headpieces and accessories, to be moved, exchanged and positioned, between two positions, preferably between the storage unit and the main machining spindle or axle of the horizontal lathe, although they may also be moved between the storage unit and a loading point or between the storage unit and an intermediate storage unit.

Said manipulation means comprise at least one handler which serves to fasten the various components, although it may also comprise at least two interchangeable handlers in the piece of handling equipment, each one of these interchangeable handlers having retention devices, used to fasten either tools and accessories or headpieces or accessories or, in other words, having a handler for each component type.

The piece of equipment aims to allow various components, such as tools, headpieces and other accessories in a horizontal lathe, to be changed, this horizontal lathe preferably being an inclined bed horizontal lathe, with at least one piece of replacement handler equipment used for all three component types, which mainly consists of having at least one handler with retention means adapted to fasten tools, headpieces and accessories, which may be moved, exchanged and positioned between the main machining spindle of the horizontal lathe and the storage unit.

The application field of the present invention falls within the technical sector of the industry dedicated to manufacturing machine tools, as well as pieces of equipment, machines and devices for changing headpieces, accessories and replaceable tools in machine tools.

### Invention background

In the state of the art, pieces of equipment for changing tools, accessories and headpieces in horizontal lathes usually have various storage units for different types of tools, accessories and headpieces, which are usually separated depending on the size and weight of said tools, headpieces and accessories, meaning that when exchanging said components, a greater number of devices are required.

Horizontal lathes which have two storage units are known, one storage unit for light components and the other for heavy or larger components, which are also situated in different locations thus requiring different handlers in order to exchange said components in the main machining spindle or axle in the lathe.

Not only does this result in an increase in costs by increasing the number of components in the piece of equipment but also makes running the machine more complicated.

Horizontal lathes are one example of this kind of lathing equipment, having a built-in rotating storage unit, by way of a drum or vertical carousel, at one end of the piece of equipment and a space defined for a concrete number of tools in each drum or carousel, which is why, when more tools are needed, it is necessary to provide more rotating drums in addition to the first. This kind of storage unit by way of a drum or carousel serves especially in small sized, lightweight tools or accessories. Some solutions which include intermediate handlers between the piece of handling equipment / light accessories and the machining spindle in the lathe are also known. For larger, heavier tools, another personalised storage unit is available to house the same.

WO 2011 /101496 A1 discloses a handler according to the preamble of claim 1.

Therefore, an aim of the present invention is to provide the state of the art with one single piece of handling equipment for moving, exchanging and positioning components in a horizontal lathe, such as headpieces, tools and accessories, in which the advantages of those systems already known are incorporated, whilst the abovementioned limitations are prevented. Indeed, it should be noted that the applicant is not aware of any equipment which has similar technical, structural and formational characteristics to those presented in the piece of equipment described in the present application.

### Explanation of the invention

The piece of equipment for changing tools, headpieces and accessories, object of the present invention, makes it possible to exchange any of the said components between the static storage unit and the main machining spindle or axle of the lathe, by means of manipulation means, which comprise at least one handler arranged at one end of a piece of handling equipment, which is preferably a robot with an automated arm, located, although it may be moved, between the storage unit and the horizontal lathe.

Therefore, a first object of the invention is a handler according to claim 1.

Likewise, it is possible that the piece of equipment has an intermediate handler in some of its formations, mainly for tools, in such a way that the main handler leaves the next tool to be changed in said intermediate handler or in an intermediate storage unit and this intermediate handler changes it on the main machining spindle of the lathe.

These and other objectives are achieved with the equipment characteristics described and claimed herein, which, as already mentioned, essentially comprises one single, static and unified longitudinal storage unit, in which all of the components (tools, headpieces and accessories) are located, a piece of handling equipment or a robot for said components, which is automated and governed by a control system and, on the free side of said piece of handling equipment, has manipulation means for moving, exchanging and positioning the components between the main machining spindle and the storage unit. Both the storage unit and the piece of handling equipment are independent and sealed from the lathe in order to ensure precision in all of the handling equipment's movements and also to ensure that the replaceable components located in the storage unit are not affected by chips and grease being projected when the machine tool is cutting, which could later affect the precision of the machining.

Specifically, the piece of handling equipment and the storage unit are located parallel to the lathe, the piece of handling equipment being located on an independent platform arranged between the lathe and the storage unit. In this way, the piece of handling equipment may be moved longitudinally along the length of the platform in order to access any point of the storage unit and later locate itself at discrete points of said platform, from which the machining area of the lathe is accessed through an opening, which remains closed except when any replaceable component, accessory, headpiece or tool, is being exchanged. The piece of handling equipment and the lathe are therefore separated by a separation device with opening and closing means, in order to carry out said component exchange between the storage unit and the lathe spindle.

Said piece of handling equipment and storage unit are placed in an enclosure isolated from the operators, which is why refitting components to the storage unit or repairing the same is carried out by means of a storage unit loading point, which is adjacent to the same and equipped with turning means, which are preferably manual, in order to access the isolated enclosure in which the handling equipment platform and the storage unit are located.

As already mentioned, the manipulation means located at the end of the piece of handling equipment or robot may comprise either one single handler or at least two interchangeable handlers. Said manipulation means have retention devices for fastening tools, accessories or headpieces. Said retention devices comprise at least a first and second retention device for manipulating preferably tools and accessories and a third retention device for manipulating preferably headpieces and accessories.

The manipulation means may consist of two interchangeable handlers on the piece of handling equipment, having a first interchangeable handler for retention devices exclusively for tools and accessories and a second interchangeable handler with retention means exclusively for headpieces and accessories. With this formation, the robot will take the first interchangeable handler from the storage unit if it is going to exchange a tool on the spindle of the lathe, and if following that a headpiece must be exchanged, after withdrawing the tool previously placed on the spindle, will leave the first interchangeable handler in the storage unit, will take the second interchangeable handler and will withdraw the headpiece located on the spindle, if any, in order to subsequently position the new headpiece.

When just one handler or main handler is located on the free end of the piece of handling equipment or robot, also object of this patent application, it comprises a first retention device located on the end of the handler, a second retention device located at the opposite end to the first retention device and a third retention device located between both first and second retention devices.

Using this one handler, it is possible to fasten components, preferably tools or accessories, which weigh less than 35 Kg, by means of the first and second retention devices and at the same time, by means of the combined performance of the third retention device and the first or second retention device, to fasten components, preferably headpieces or accessories, which weigh more than 35 Kg.

The first and second retention devices in the main handler are preferably pincers which grip the tools or accessories, specifically on the standardized flange or fastening element of the tool or accessory.

Likewise, the third fastening device in the main handler, which acts alongside one of the previous first or second retention devices, is preferably formed by a ball collet retained by a spring and operated hydraulically, intended to house a pivot or first fastening element arranged in the headpiece or accessory, whilst the first or second retention device acts on a second fastening element arranged on said headpiece or accessory, therefore operating on two fastening points or elements in the headpiece or accessory.

Therefore, in the main handler, the first and second retention devices are employed to fasten components, tools or accessories, with a single fastening element located therein, whilst the third retention element, operating alongside the first or second retention device, is employed to fasten components, usually headpieces or accessories, with two fastening elements arranged in the same.

Said main handler is preferably composed of a flat body with a central stretch, at the sides of which the first and second retention devices are located, at an angle from the central stretch, in such a way that in this last stretch, the third retention device is placed and the three retention devices remain on the same first plane of the handler. Likewise, and perpendicularly to the plane of the three devices, in the central stretch and on a plane which is perpendicular to the previous one, a coupling device is arranged in order to couple the handler to the piece of handling equipment.

The main handler object of the present invention may be used in other pieces of handling equipment which differ from the one mentioned above, in robotic arms and in other machine tools which differ from the horizontal lathe and which require heavy and light components to be exchanged by means of one single handler.

Only having one piece of handler equipment or robot to change components is highly advantageous in comparison to conventional equipment, which requires two separate pieces of equipment, given that the number of necessary trips in pieces of handler equipment is reduced and as a result, the time required to make the change also diminishes. Furthermore, the probability of faults is reduced since only one piece of management software is used, a control system is implemented and fewer trips and maneuvering signals are required, thereby also facilitating the maintenance of the ensemble.

When it is necessary to reduce the time taken to change tools and light accessories even further, as mentioned earlier, it is possible that the piece of equipment object of the present invention has an intermediate handler built in, in addition to the piece of handler equipment or robot and its main handler, in order to exchange tools, said intermediate replacement device having the same characteristics as the main handler, in order to fasten tools. In other words, it has two retention devices which are preferably pincers that grip the tools, specifically on the standardized flange or fastening element of the tool or accessory.

### Description of the drawings

In order to complement the present description, with the aim of facilitating a better understanding of the invention characteristics, the present descriptive specification is accompanied by a set of drawings, which form an intrinsic part of this this description and serve as a non-limiting example thereof:
Figure 1 is a perspective view of the piece of equipment for changing the components in horizontal lathes, wherein the horizontal lathe and the single storage unit can be seen.
Figure 2 is a detailed representation of the main machining spindle or axle in the horizontal lathe.
Figure 3 is a perspective view of a handler, object of the present invention.
Figure 4 is a perspective view of a handler fastening a tool or accessory which is not very heavy.
Figure 5 is a perspective view of a handler fastening a tool or accessory which is not very heavy.

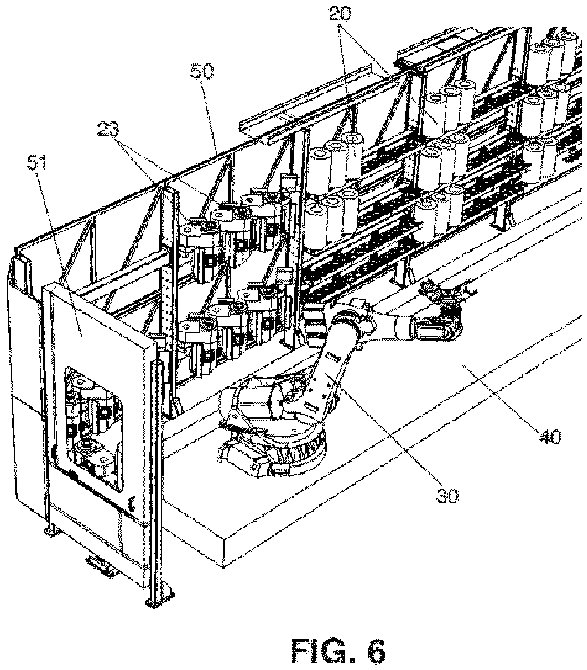

Figure 6 is a perspective view of the piece of handling equipment and the storage unit.

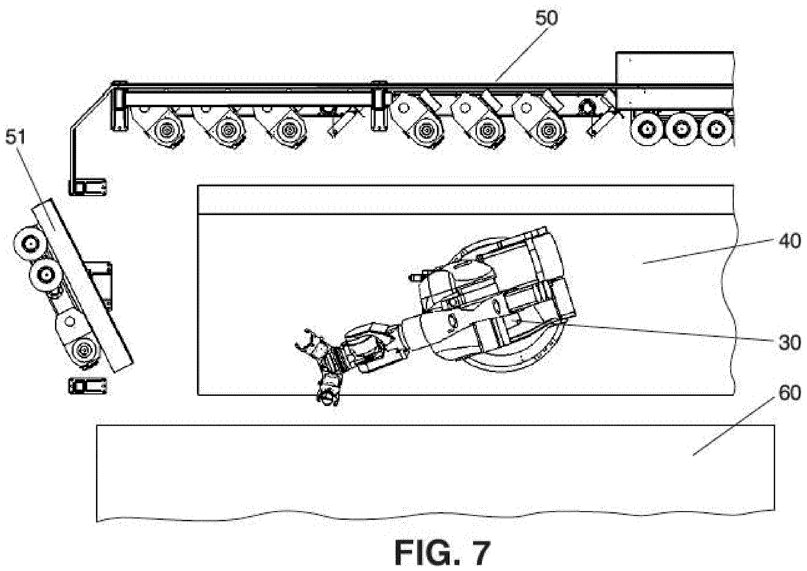

Figure 7 is a plan view of the location of the storage unit, piece of handling equipment and lathe.
Figure 8 is a perspective view of a piece of handling equipment or robotic arm with the handler, object of the invention, fastening a heavy component, specifically a headpiece.
Figure 9 is a perspective view of a detail of the coupling between the heavy component and the handler.
Figure 10 is a perspective view of a detail of the handler withdrawal once it has coupled the heavy component to the main machining spindle.
Figures 11 to 14 represent a sequence in the exchange process for a tool on the spindle of the lathe by means of an intermediate handler.

### Preferred embodiment of the invention

The example of the present invention detailed herein proposes a new piece of equipment for exchanging components in horizontal lathes and manipulation means, which has one single static storage unit and one single piece of automated handling equipment, which has manipulation means in at least one main handler, in order to move the various components, such as tools, headpieces and accessories, between two positions, preferably between the storage unit and the main machining spindle or axle in the horizontal lathe.

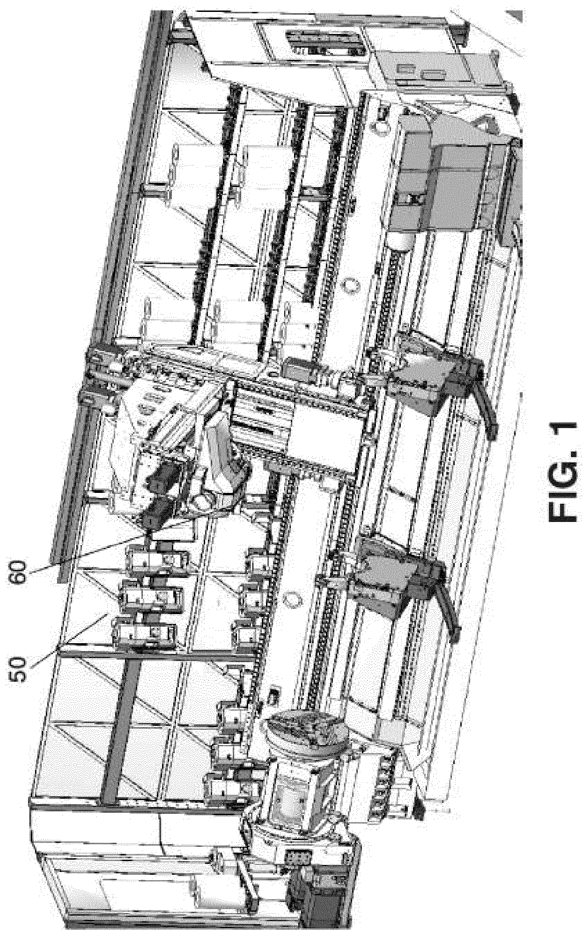

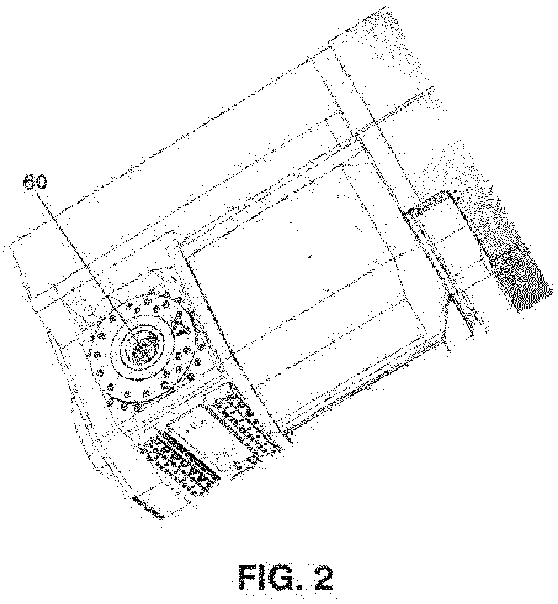

Figure 1 is a perspective view of a horizontal lathe (60) with one single static storage unit (50) which is parallel, preferably in the rear area of the horizontal lathe. Said storage unit preferably separates the various replaceable components, namely tools (20), accessories (22) or headpieces (23). Said horizontal lathe (60) comprises a main machining spindle or axle upon which the various components, tools, headpieces or accessories are placed, employed in the machining of the piece located in the lathe plate (60). A detail of said lathe spindle (60) may be observed in Figure 2. The tools (20), and accessories (22) or the headpieces (23) are located on said lathe spindle (60). It is possible to change tools (20) directly on the lathe spindle (60) and also on some headpieces (23).

A piece of handling equipment or a robot is situated between the lathe (60) and the storage unit (50), which is responsible for exchanging components between the lathe spindle (60) and the storage unit (50). The machining area of the lathe is best separated from the previous area in which the piece of handling equipment or robot and the storage unit are located, with seals between them, in order to prevent products resulting from the mechanization from being projected towards said previous zone, thus preventing the risk of affecting the components and thereby the precision thereof during the machining, when said components are used. A separation device with opening and closing means is also arranged in order to grant the manipulation means or the handler (10) access to the lathe spindle (60).

The piece of handling equipment or robot (30) makes it possible to exchange any kind of component located in the single static storage unit (50) with the main machining spindle of the lathe (60) by means of a main handler (10), which is arranged on the free end of said piece of handling equipment or robot (30). Said robot (30) is a robot with an automated arm, which is controlled and governed by a control system or piece of management software, in the same way as the other components in the piece of equipment. Said robot (30) comprises a base which moves along the storage unit (50) and is connected to the main handler (10) through various mechanical arms (31, 32, 33, 34, and 35). The robot (30) travels on a bed or platform (40) which is independent from the lathe bed (60) and on the bearing surface of the storage unit (50), in order to ensure its complete independence from them. This independent bed (40) ensures that both the lathe (60) and the storage unit (50) are not affected by the vibrations generated when the robot (30) moves and of course ensures that the vibrations generated by the lathe as it operates do not affect the robot (30) when it is travelling or the storage unit when the robot (30) bed (40) is located between said storage unit (50) and the lathe (60).

Likewise, the piece of handling equipment or robot (30) and the storage unit (50) are located parallel to the lathe (60). The piece of handling equipment (30) may be moved longitudinally along the length of said bed (40) in order to access any point of the storage unit (50) and return to the point of the bed (40) from which it accesses the machining area of the lathe (60). Said access is achieved via an opening, which remains closed in order to ensure a tight seal as the lathe (60) operates, except when any replaceable component, accessory, headpiece or tool is being exchanged, between the lathe spindle (60) and the handler (10).

Likewise, the piece of handling equipment (30) and the storage unit (50) are placed in an enclosure isolated from the operators for safety reasons, in such a way that components are replaced and refitted to the storage unit using a loading point (51). Said loading point (51) is located at one end of the storage unit (50) and preferably has turning means, which are preferably manual, in order to replace or refit the components. In order to replace a component, the robot (30), using its handler (10), will leave the component on the loading point (51) and the operator will rotate the same in order to withdraw said component from the loading point (51) and position a new component. It will subsequently rotate the loading point (51) once again and the robot (30) will position the new component in the storage unit (50).

As already mentioned, the piece of handling equipment or robot (30) has a main handler (10) on its free end, which makes it possible to fasten the replaceable component and then then place it on the main machining spindle of the lathe (60) or in the storage unit (50). In other words, the robot (30), alongside the handler (10), makes it possible to move, exchange and position the replaceable components. Said handler (10) has a first retention device (11) located at one end of the handler (10), a second retention device (12) located at the opposite end to the first retention device (11) and a third retention device (13), located between both the first (11) and second (12) retention devices. The first (11) and second (12) retention devices are used to fasten the components with one single fastening element located therein, whilst the third retention device (13), acting alongside the first (11) or second (12) retention device, is used to fasten components with two fastening elements arranged therein. The first (11) and second (12) retention devices are preferably used to fasten tools (20) and accessories (22), whilst the third (13) retention device, alongside one of the previous retention devices, is used to fasten headpieces (23). In any case, and independently of the purpose or use of the component (20, 22, 23), the first and second retention devices (11, 12) are used to fasten lighter elements, preferably of up to 35 Kg and the third retention device is used for heavier elements, preferably from 35 Kg. In any case, the third retention device (13) could be used to fasten components which are not headpieces (23) and which, given their form, require two bearing points rather than one.

Figure three represents a main handler (10), wherein various fastening devices (11, 12 and 13) can be observed. Said handler (10) is composed of a flat body with a central stretch (15) at the sides of which the first (11) and second (12) retention devices are located, located at an angle from the central stretch (15), in such a way that in this last stretch (15), the third retention device (13) is used and the three retention devices (11, 12 and 13) are on the same first plane of the handler (10). Likewise and perpendicularly to the plane of the three devices (11, 12 and 13), a coupling device (14) for coupling the handler (10) to the piece of handler equipment (30) is arranged on the central stretch (15) and on a plane which is perpendicular to the previous one, which is more specifically located at the free end of the second arm (31) thereof.

As can be seen in the figures, the first (11) and second (12) retention devices are pincers which grip the tools (20) or accessories (22), specifically on the standardised flange or fastening element (21) of the tool (20) or accessory (22).

Similarly, the third retention device (13), which acts alongside one of the previous first or second retention devices (11, 12) is preferably formed by a ball collet retained by a spring and operated hydraulically, intended to house a pivot or a first fastening element (25) arranged in the headpiece (23) or accessory (22), whilst the first or second retention device (11, 12) acts on a second fastening element (24) arranged on said headpiece (23) or accessory (22), therefore acting on two fastening points or elements of the headpiece (23) or accessory (22).

The first and second retention devices (11, 12) are therefore preferably used to fasten components, tools (20) or accessories (22), with one single fastening element (21) located therein, whilst the third retention device (13), acting alongside the first or second retention devices (11, 12) is employed to fasten the components, usually headpieces (23) or accessories (22), with two fastening elements (24, 25) arranged in the same.

The tools (20), just like the rest of the components (22, 23) arranged in the storage unit (50) are preferably located on shelves, where they remain only as a result of gravity. The fastening elements (21) for the tools (20) and accessories (22) also serve to keep said components in position in the storage unit.

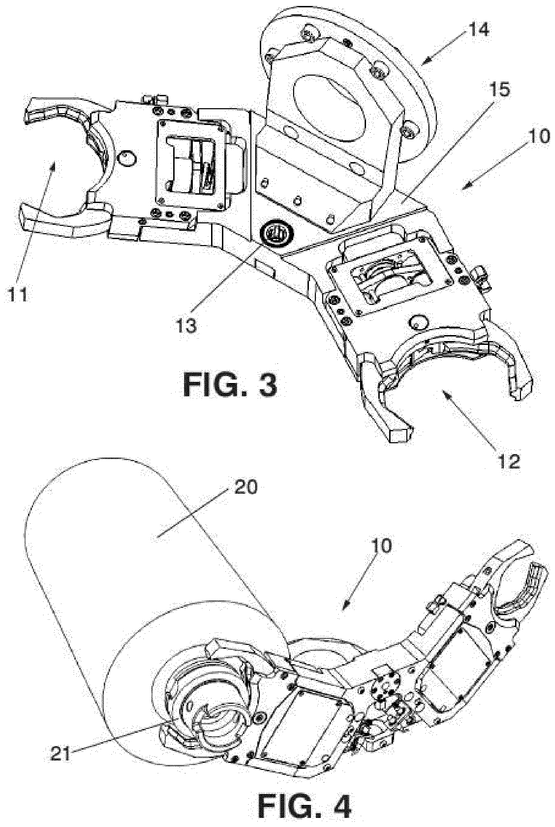

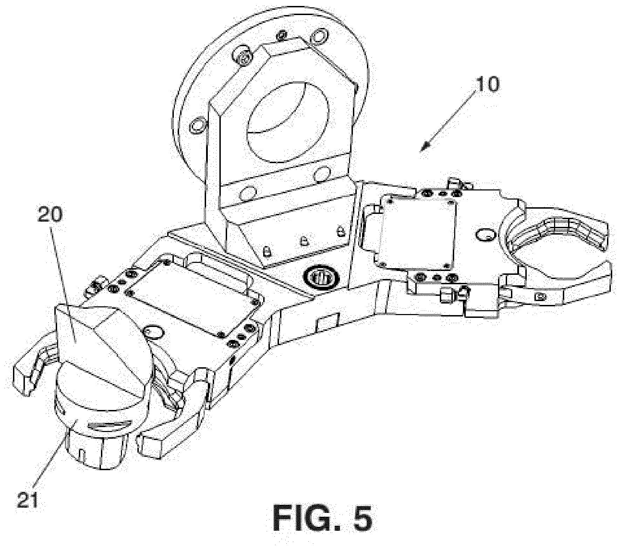

Based on the above description of the figures, below two example embodiments of the piece of handling equipment (30) and its handler (10) are described. In figure 4, a handler (10) can be seen, which, by means of a first retention means (11) formed by a pincer shaped mechanism, fastens a tool (20) via its fastening element or standardised flange (21). The robot (30) moves to the storage unit (50) point where the desired tool (20) is stored and traps the standardised flange (21) between its two pincers by means of the first (11) or second (12) retention device, before moving said tool (2) towards the lathe spindle (60). Figure 5 also shows how one of the pincers (11) in the piece of handling equipment (10) fastens a tool (20) using its flange (21).

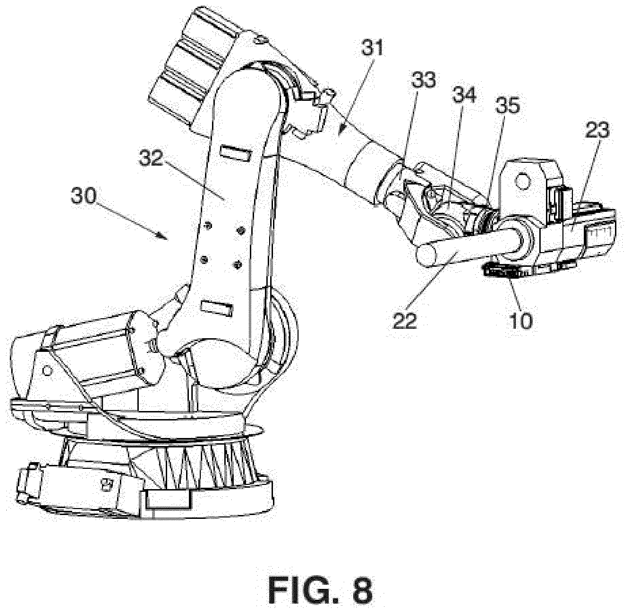

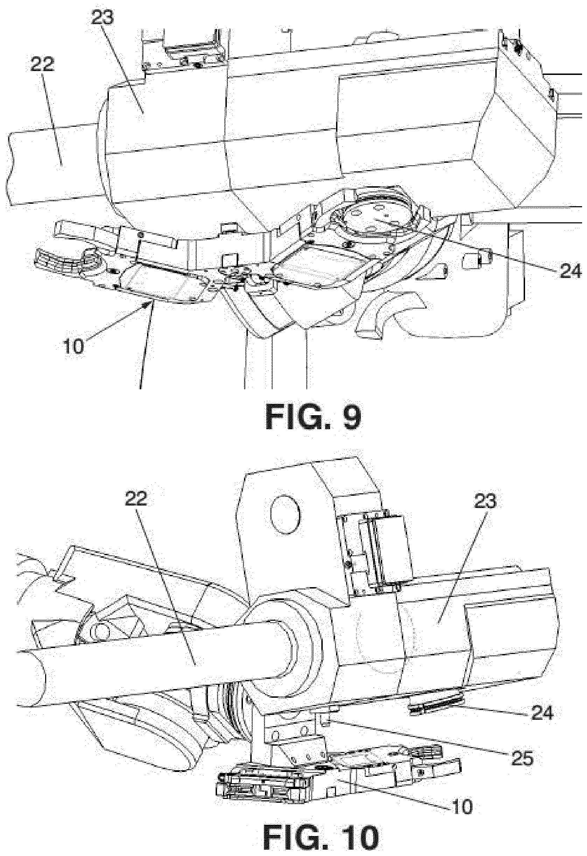

Similarly, Figures 8, 9 and 10 show the piece of handling equipment or robot (30) with a headpiece (23) arranged in the handler (10) of the robot. More specifically, a headpiece (23) with an accessory (22) installed into it can be seen. Figure 9 shows the fastening of the headpiece (23) in the handler (10) by means of the first fastening element (24) trapped between the pincers of one of the retention elements (11, 12) of the handler (10) and the pivot or second fastening element (25) introduced into the third retention device (13). Figure 10 shows how the handler (10) withdraws the spindle (60) once the headpiece (23) has been situated.

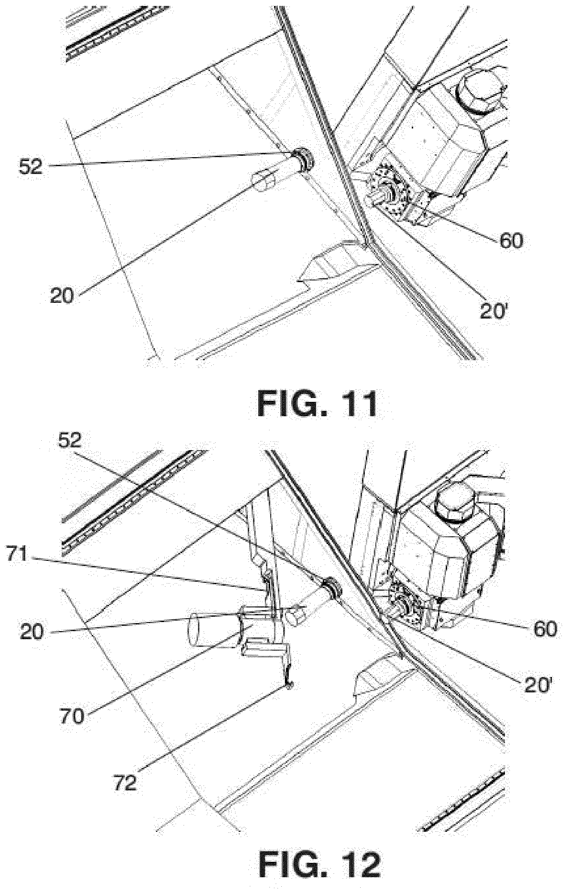

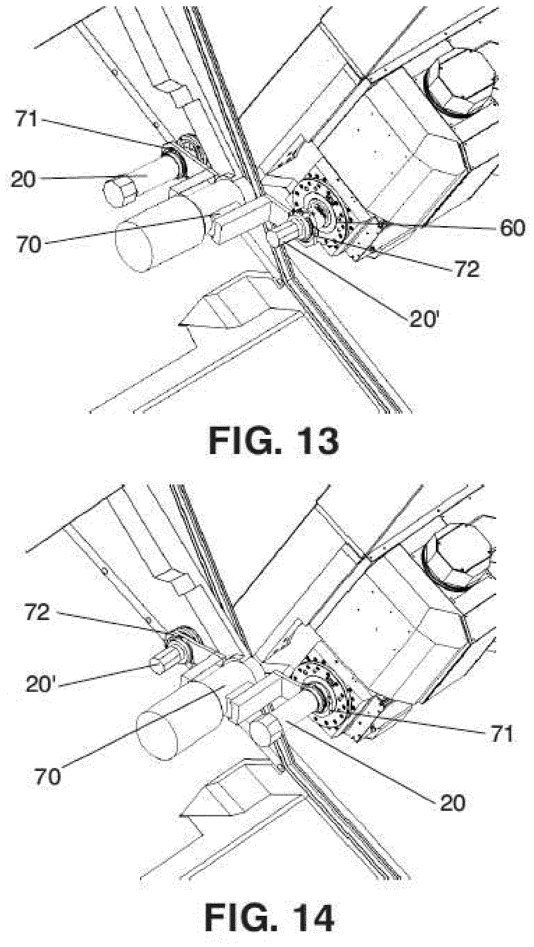

Figures 11 to 14 represent an additional alternative to the equipment for replacing components described up until now, which consists in arranging an intermediate handler (70) and an intermediate tool storage unit (52) between the main handler (10) of the piece of handling equipment or robot (30) and the lathe spindle (60), specifically located in the separation device between the lathe (60) and the robot (30). The main function of this intermediate interchange device (70) is to accelerate the exchanging of some components, mainly tools (20) or accessories (22), in such a way that the main handler (10) leaves the next tool to be changed in the intermediate tools storage unit (52) and the intermediate handler (70) changes it on the main machining spindle (60) of the lathe. Said intermediate handler (70) is similar in formation to the main handler (10) but only has two retention devices, a fourth retention device (71) and a fifth retention device (72) which are lateral and which, as defined above, are preferably composed of pincers or any component which may fasten the tool (20), specifically the standardised flange or fastening element (21) of the tool (20) or accessory (22). Figure 11 represents the intermediate storage unit (52) with a tool (20) located in the separating element between the lathe (60) and the area from which the robot (30) is found, showing the main machining spindle or axle with a tool (20') which is going to be exchanged. Figure 12 illustrates how the intermediate handler, with the fourth (71) and fifth (72) retention devices, descends without any tool, in order to later turn (Figure 13) and couple itself by means of the fourth retention device (71) to the tool (20) located in the intermediate storage unit (52) and by means of the fifth retention device (72) to couple itself to the tool (20') located in the lathe spindle (60). Following that, once both tools (20, 20') have been withdrawn from their positions, the intermediate interchange device (70) rotates in such a way that it places the tool (20'), which was previously located on the spindle, in the intermediate storage unit (52). Before the tool (20) arranged on the lathe (6) begins to be machined, the separation device closes for safety and sealing reasons. The withdrawn tool (20') remains in the intermediate storage unit (52) until it can be used once more on the spindle or until the piece of handler equipment or robot (30) withdraws it and transports it to the main storage unit (50).

## Claims

1. Handler (10) with a headpiece or accessory for exchanging tools, headpieces and accessories between the positions in which they are stored and the positions of a machine tool in which said components are required in order for the machine tool to be used, which can be coupled to the free end of a piece of handling equipment or robot, comprising:
- a first retention device (11) located at one end of the handler (10);
- a second retention device (12) located at the opposite end to the first retention device (11);
- a third retention device (13) located between both the first (11) and second (12) retention devices; and **characterized by**
- a headpiece or accessory (23, 22) with two fastening elements (24, 25) arranged on them (23,22), in such a way that the first (11) and second (12) retention devices can be used to fasten tools (20) or accessories (22) with one fastening element (21) arranged on them (20, 22), and the third retention device (13), acting in combination with the first (11) or second (12) retention devices, can be used to fasten the heavy headpieces (23) and accessories (22) with said two fastening elements (24, 25) arranged on them (23, 22).

2. Handler, according to claim 1, **characterized in that** it is formed by a flat body with a central stretch (15) at the sides of which the first (11) and second (12) retention devices are at an angle to the central stretch (15) and in which the third retention device (13) is located, the three retention devices being on the same first plane of the handler (10).

3. Handler, according to claim 2, **characterised in that** a coupling device (14) is arranged on said central stretch (15) on a plane which is perpendicular to that of the three devices, in order to couple the handler (10) to the piece of handling equipment (30).

4. Handler, according to claim 1, **characterized in that** the first and second retention devices are pincers (11, 12) which fasten the tool (20) or accessory (22) through the flange or fastening element (21) which are located at one end of the tool and have been standardized to be clamped by the first or second retention devices (11, 12).

5. Handler, according to claim 1, **characterized in that** the third retention device (13) is a ball collet retained by a spring and operated hydraulically, in which a pivot (25) arranged in the headpiece (23) or accessory (22) is housed and which acts alongside the first or second retention devices (11, 12), which at the same time clamps a fastening element (24), which is arranged on the headpiece or accessory and has been adapted to this end.

6. Handler, according to claim 1, **characterized in that** the third retention device (13) is used to fasten and move headpieces (23) and accessories (22) which weigh more than 35 Kg.

7. Handler, according to claim 1, **characterized in that** the first and second retention devices (11, 12) are used to fasten and move tools and accessories which weigh no more than 35 Kg.

## Patentansprüche

1. Handhabungsgerät (10) mit einem Kopfteil oder Zusatzteil zum Wechseln von Werkzeugen, Kopfteilen und Zusatzteilen zwischen den Stellungen, in welchen sie gespeichert sind, und den Stellungen einer Werkzeugmaschine, in welchen die genannten Bestandteile benötigt werden, um die Werkzeugmaschine zu verwenden, welche mit dem freien Ende einer Handhabungseinrichtung oder eines Roboters gekoppelt werden können, umfassend:
- eine erste Rückhaltevorrichtung (11), welche sich an einem Ende des Handhabungsgeräts (10) befindet;
- eine zweite Rückhaltevorrichtung (12), welche sich am entgegengesetzten Ende der ersten Rückhaltevorrichtung (11) befindet;
- eine dritte Rückhaltevorrichtung (13), welche sich zwischen der ersten Rückhaltevorrichtung (11) und der zweiten Rückhaltevorrichtung (12) befindet; und **gekennzeichnet durch**
- ein Kopfteil oder Zusatzteil (23, 22) mit zwei Befestigungselementen (24, 25) derart darauf (23, 22) angeordnet, dass die erste Rückhaltevorrichtung (11) und die zweite Rückhaltevorrichtung (12) dazu verwendet werden können, Werkzeuge (20) oder Zusatzteile (22) mit einem darauf (20, 22) angeordneten Befestigungselement (21) zu befestigen, und die dritte Rückhaltevorrichtung (13), welche in Kombination mit der ersten Rückhaltevorrichtung (11) oder zweiten Rückhaltevorrichtung (12) wirkt, dazu verwendet werden kann, die schwere Kopfteile (23) und Zusatzteile (22) mit den genannten zwei darauf (23, 22) angeordneten Befestigungselementen (24, 25) zu befestigen.

2. Handhabungsgerät nach Anspruch 1, **dadurch gekennzeichnet, dass** es aus einem flachen Körper mit einem mittigen Abschnitt (15) gebildet ist, an dessen Seiten die erste Rückhaltevorrichtung (11) und die zweite Rückhaltevorrichtung (12) einen Winkel mit dem mittigen Abschnitt (15) einschließen und in welchen sich die dritte Rückhaltevorrichtung (13) befindet, wobei die drei Rückhaltevorrichtungen auf der gleichen ersten Ebene des Handhabungsgeräts (10) sind.

3. Handhabungsgerät nach Anspruch 2, **dadurch gekennzeichnet, dass** eine Kopplungsvorrichtung (14) auf dem genannten mittigen Abschnitt (15) auf einer Ebene angeordnet ist, welche senkrecht zu derjenigen der drei Vorrichtungen ist, um das Handhabungsgerät (10) mit der Handhabungseinrichtung (30) zu koppeln.

4. Handhabungsgerät nach Anspruch 1, **dadurch gekennzeichnet, dass** die erste Rückhaltevorrichtung und die zweite Rückhaltevorrichtung Zangen (11, 12) sind, welche das Werkzeug (20) oder Zusatzteil (22) durch den Flansch oder das Befestigungselement (21) befestigen, welche sich an einem Ende des Werkzeugs befinden und dazu normiert worden sind, um von der ersten Rückhaltevorrichtung (11) oder zweiten Rückhaltevorrichtung (12) geklemmt zu werden.

5. Handhabungsgerät nach Anspruch 1, **dadurch gekennzeichnet, dass** die dritte Rückhaltevorrichtung (13) ein Kugelspannring ist, welcher von einer Feder zurückgehalten und hydraulisch betätigt wird, in welchem ein im Kopfteil (23) oder Zusatzteil (22) angeordneten Stift (25) aufgenommen ist und welcher mit der ersten Rückhaltevorrichtung (11) oder zweiten Rückhaltevorrichtung (12) zusammenwirkt, welcher gleichzeitig ein Befestigungselement (24) klemmt, welches auf dem Kopfteil oder Zusatzteil angeordnet ist und dazu angepasst worden ist.

6. Handhabungsgerät nach Anspruch 1, **dadurch gekennzeichnet, dass** die dritte Rückhaltevorrichtung (13) dazu verwendet wird, Kopfteile (23) und Zusatzteile (22) zu befestigen und zu bewegen, welche mehr als 35 kg wiegen.

7. Handhabungsgerät nach Anspruch 1, **dadurch gekennzeichnet, dass** die erste Rückhaltevorrichtung (11) und zweite Rückhaltevorrichtung (12) dazu verwendet werden, Werkzeuge und Zusatzteile zu befestigen und zu bewegen, welche nicht mehr als 35 kg wiegen.

## Revendications

1. Manipulateur (10) avec une tête ou un accessoire pour échanger des outils, des têtes et des accessoires entre les positions dans lesquelles ils sont stockés et les positions d'une machine-outil dans lesquelles lesdits composants sont nécessaires pour utiliser la machine-outil, lesquels peuvent être couplés à l'extrémité libre d'un équipement de manipulation ou robot, comprenant :
- un premier dispositif de retenue (11) situé à une extrémité du manipulateur (10);
- un deuxième dispositif de retenue (12) situé à l'extrémité opposée au premier dispositif de retenue (11);
- un troisième dispositif de retenue (13) situé entre le premier (11) et le deuxième (12) dispositifs de retenue; et **caractérisé par**
- une tête ou un accessoire (23, 22) sur lesquels (23, 22) sont agencés deux éléments de fixation (24, 25), de sorte que le premier (11) et le deuxième (12) dispositifs de retenue puissent être utilisés pour fixer des outils (20) ou des accessoires (22) sur lesquels (20, 22) est agencé un élément de fixation (21), et le troisième dispositif de retenue (13), agissant en combinaison avec le premier (11) ou le deuxième (12) dispositifs de retenue, peut être utilisé pour fixer les têtes (23) et les accessoires (22) lourds sur lesquels (23, 22) sont agencés lesdits deux éléments de fixation (24, 25).

2. Manipulateur selon la revendication 1, **caractérisé en ce qu'**il est formé par un corps plat avec un tronçon central (15) sur les côtés duquel le premier (11) et le deuxième (12) dispositifs de retenue forment un angle avec le tronçon central (15) et dans lequel est situé le troisième dispositif de retenue (13), les trois dispositifs de retenue étant sur le même premier plan du manipulateur (10).

3. Manipulateur selon la revendication 2, **caractérisé en ce qu'**un dispositif d'accouplement (14) est agencé sur ledit tronçon central (15) dans un plan qui est perpendiculaire à celui des trois dispositifs, afin de coupler le manipulateur (10) à l'équipement de manipulation (30).

4. Manipulateur selon la revendication 1, **caractérisé en ce que** le premier et le deuxième dispositifs de retenue sont des pinces (11, 12) qui fixent l'outil (20) ou l'accessoire (22) à travers la collerette ou l'élément de fixation (21) qui sont situés à une extrémité de l'outil et ont été normalisés pour être serrés par le premier ou le deuxième dispositifs de retenue (11, 12).

5. Manipulateur selon la revendication 1, **caractérisé en ce que** le troisième dispositif de retenue (13) est une douille à bille retenue par un ressort et actionnée hydrauliquement, dans laquelle est logé un pivot (25) agencé dans la tête (23) ou l'accessoire (22) et qui agit aux côtés du premier ou du deuxième dispositifs de retenue (11, 12), qui serre en même temps un élément de fixation (24), qui est agencé sur la tête ou l'accessoire et qui a été adapté dans ce but.

6. Manipulateur selon la revendication 1, **caractérisé en ce que** le troisième dispositif de retenue (13) est utilisé pour fixer et déplacer des têtes (23) et des accessoires (22) pesant plus de 35 Kg.

7. Manipulateur selon la revendication 1, **caractérisé en ce que** le premier et le deuxième dispositifs de retenue (11, 12) sont utilisés pour fixer et déplacer des outils et des accessoires ne pesant pas plus de 35 Kg.
